# EUROPÄISCHE PATENTSCHRIFT

(11) **EP 3 016 782 B1**
(45) Veröffentlichungstag und Bekanntmachung des Hinweises auf die Patenterteilung: **22.05.2019**
(21) Anmeldenummer: 14752255.1
(22) Anmeldetag: 17.06.2014
(51) Int. Cl.: B25B 27/00, F16L 23/06, B25B 27/10, B21D 39/04

(54) **PRESSWERKZEUG ZUM VERBINDEN VON WERKSTÜCKEN MITTELS UMFORMEN**
PRESS TOOL FOR JOINING WORKPIECES BY MEANS OF FORMING
OUTIL DE SERTISSAGE POUR ASSEMBLER DES PIÈCES PAR DÉFORMATION

(30) Priorität: 01.07.2013 DE 102013106870
(43) Veröffentlichungstag der Anmeldung: 11.05.2016
(73) Patentinhaber: Rothenberger AG, 65779 Kelkheim (DE)
(72) Erfinder: GREDING, Arnd, 65719 Hofheim (DE)
(74) Vertreter: Launhardt, Thomas
(86) Internationale Anmeldenummer: PCT/DE2014/100200
(87) Internationale Veröffentlichungsnummer: WO 2015/000465

(56) Entgegenhaltungen:
- DE-B- 1 256 011
- DE-U1-202009 009 456

## Beschreibung

Die Erfindung betrifft ein Presswerkzeug zum Verbinden von Werkstücken mittels Umformen mit wenigstens zwei gegeneinander bewegbaren Pressbacken, mittels welchen die zu verbindenden Werkstücke zumindest teilweise umgreifbar sind und welche eine Matrize für wenigstens eines der zu verbindenden Werkstücke ausbilden, gemäß dem Oberbegriff des Anspruchs 1.

Presswerkzeuge sind unter anderem als Pressketten, Pressschlingen oder Pressringe bekannt und dienen beispielsweise zum Verbinden von Rohrstücken. Dazu kann als Verbinder eine verformbare Hülse, ein sogenannter Pressfitting, zum Einsatz kommen. In diesem Fall wird die Verbindung üblicherweise erzeugt, indem die Rohrstücke mit jeweils einem Ende in den Pressfitting eingeschoben werden und anschließend das Presswerkzeug auf den Pressfitting einmal im Überlappungsbereich mit dem einen Rohrende und einmal im Überlappungsbereich mit dem anderen Rohrende pressend wirkt.

Durch das Presswerkzeug wird eine Umformkraft auf den Pressfitting ausgeübt, welcher dadurch eine Formänderung erfährt, so dass eine Pressverbindung zwischen dem Pressfitting und dem darin aufgenommenen Rohrende erzeugt ist. Üblicherweise umgreift das Presswerkzeug mit seinen Pressbacken das Pressfitting und übt darüber die Umformkraft auf den Außenumfang des Pressfittings aus.

Die Pressbacken bilden für gewöhnlich eine Matrize für das zu verformende Werkstück aus, da sie direkt auf das zu verformende Werkstück drücken. Durch die Ausbildung als Matrize soll eine gezielte plastische Formänderung des zu verformenden Werkstückes auf die durch die Matrize vorgegebene Zielkontur bewirkt werden.

Üblicherweise weicht jedoch die tatsächliche Formänderung häufig davon ab, da es zusätzlich zu einer oder mehreren ungezielten plastischen Formänderungen kommt. Diese Verformungen sind an solchen Stellen des zu verformenden Werkstücks begünstigt, welche von den Pressbacken nicht beaufschlagt sind. Dort kann der Werkstoff im Zuge des Pressvorganges hinfließen und sich zu einer unerwünschten Form aufschichten. Auf diese Weise kann ein nach außen stehender relativ spitzer Vorsprung entstehen, welcher die Funktionalität der Oberfläche erheblich einschränken.

Beispielsweise ist eine Nutzung der Oberfläche als Anlagefläche für ein Dichtungselement dann nur noch sehr eingeschränkt oder gar nicht möglich, da durch einen solchen Vorsprung die Dichtungswirkung herabgesetzt ist und zudem die Lebensdauer des Dichtelementes beeinträchtigt wird.

Ein gattungsgemäßes Presswerkzeug ist aus der DE 12 56 011 B bekannt.

Der Erfindung liegt die Aufgabe zugrunde, ein Presswerkzeug mit den eingangs genannten Merkmalen bereit zu stellen, durch welches die angestrebte Formänderung beim umformenden Verbinden der Werkstücke besser als bisher erreicht wird.

Diese Aufgabe wird mit einem Presswerkzeug gelöst, welches die Merkmale des Anspruches 1 aufweist. Vorteilhafte Ausgestaltungen der Erfindung ergeben sich aus den Unteransprüchen, der nachfolgenden Beschreibung und den Figuren.

Ein erfindungsgemäßes Presswerkzeug zum Verbinden von Werkstücken mittels Umformen, wie beispielsweise Kaltumformen, hat wenigstens zwei gegeneinander bewegbare, insbesondere gegeneinander bewegbar verbundene Pressbacken, mittels welchen die zu verbindenden Werkstücke zumindest teilweise umgreifbar sind und welche eine Matrize für wenigstens eines der zu verbindenden Werkstücke ausbilden. Das Presswerkzeug hat ferner eine Schließstelle, welche durch einander zugeordnete Stirnflächen von zwei der Pressbacken gebildet ist.

Es ist vorgesehen, dass in einem an wenigstens einer der Stirnflächen der Schließstelle angrenzenden Bereich die Oberfläche der zugehörigen Pressbacke durch einen Versatz zurückgenommen ist.

Durch diese Maßnahme ist ein Bereich gezielt vorgegeben, in welchen Werkstoff beim Umformen des Werkstückes einfließen kann, um die Fließbewegung des Werkstoffes soweit zu kontrollieren, dass eine ungezielte plastische Formänderung des Werkstückes verhindert ist. Es wird also durch die Absetzung der Oberfläche die Zielkontur des Presswerkzeuges bewusst verändert, um einer ungewollten Verformung des Werkstückes entgegenzuwirken. Es wird damit zwar in Kauf genommen, sich von einer angestrebten Idealkontur des umgeformten Werkstücks zu entfernen. Die Bildung ungewollter Materialvorsprünge auf der Oberfläche des Werkstückes bleibt dadurch jedoch aus.

Im Zuge der Erfindung ist unter der Zielkontur des Presswerkzeuges der im geschlossenen Zustand des Presswerkzeuges von den Pressbacken eingefangene Raum zu verstehen. Von der Zielkontur ausgenommen sind Abschnitte, die sich aus etwaigen Radien an Übergängen zwischen der jeweiligen Stirnfläche und der Pressfläche der Pressbacken ergeben. Derartige Radien können vorgesehen sein und dienen der Vermeidung von Kratzern und Abtragungen auf dem Werkstück im Zuge des Zusammendrückens der Pressbacken.

Demgegenüber ist unter der Idealkontur des bearbeiteten bzw. umgeformten Werkstücks die theoretisch optimale Form des Werkstücks nach dem Verpressen zu verstehen.

Indem die Oberfläche der Pressbacke zurückgenommen ist, wird das Werkstück in diesem Bereich im Wesentlichen nicht oder nur geringfügig von dem Presswerkzeug unterstützt. Es ist dadurch das angestrebte Einfließen von Werkstoff im Zuge des Umformvorganges begünstigt. Durch die Lage des Bereiches angrenzend an die Schließstelle ist ein Ort ausgewählt, an dem im Zuge des Umformvorganges die Fließbewegung den Werkstoff besonders hinführt.

Der die zurückgenommene Oberfläche bewirkende Versatz bildet einen Übergang, welcher sprungartig, beispielsweise in Art eines Rücksprungs der Oberfläche, und/oder stetig verlaufend, beispielsweise durch eine Schräge oder kurvenförmigen Verlauf, realisiert sein kann. Denkbar ist es, dass zur Vermeidung scharfkantiger Ecken und Kanten an dem Versatz wenigstens eine Rundung vorgesehen ist.

Insbesondere bildet der Versatz einen Verlauf der Oberfläche, welcher sich gegenüber dem Verlauf der sich an den Versatz anschließenden zurückgenommenen Oberfläche unterscheidet.

Insbesondere ist der durch den Versatz gebildete Übergang auf die zurückgenommene Oberfläche in Abstand zu der Schließstelle angeordnet, so dass die zurückgenommene Oberfläche sich im Wesentlichen bis an die Schließstelle erstreckt.

Insbesondere ist durch die zurückgenommene Oberfläche eine Aufnahme für Verformungsmaterial wenigstens eines der Werkstücke gebildet, wobei die Aufnahme im geschlossenen Zustand des Presswerkzeuges beibehalten ist. Es ist dadurch sichergestellt, dass die Fließbewegung des Verformungsmaterials bzw. Werkstoffes über den gesamten Pressvorgang kontrolliert ist, indem über den gesamten Pressvorgang das Verformungsmaterial der Werkstücke in die Aufnahme einfließen kann und auch am Ende des Pressvorganges, beispielsweise wenn die Pressbacken mit Ihren Stirnflächen gegeneinander anliegen, noch in ausreichendem Maße in der Aufnahme aufgenommen ist.

Nach der Erfindung ist es vorgesehen, dass die Oberfläche der Pressbacke in dem Bereich zumindest teilweise im Wesentlichen parallel verschoben ist und/oder zumindest teilweise mit im Wesentlichen gleichem Abstand zu der Zielkontur des Presswerkzeuges verschoben ist. Auf diese Art
und Weise wird mittels des Presswerkzeuges eine flache Aufwulstung an dem umgeformten Werkstück erzeugt, deren Oberfläche im Wesentlichen gleichförmig zu der Oberfläche des umgeformten Werkstückes und/oder der Idealkontur des umgeformten Werkstücks ist. Es ist dadurch die Funktionalität der Oberfläche des umgeformten Werkstückes gegenüber dem Zustand vor der Umformung im Wesentlichen nicht oder zumindest nur geringfügig verändert. Es kann somit durch den Versatz die Oberfläche der Pressbacke in dem Bereich derart zurückgenommen sein, dass die zurückgenommene Oberfläche gegenüber der Zielkontur des Presswerkzeuges einen im Wesentlichen gleichbleibenden Abstand hat.

Beispielsweise kann die Oberfläche des Presswerkzeuges bzw. Pressbackens in dem Bereich, insbesondere über eine vorgegebene Länge in Umfangsrichtung und/oder eine vorgegebene Winkelweite, im Wesentlichen gleichförmig beabstandet gegenüber dem Verlauf der Oberfläche ohne den Versatz zurückverschoben sein.

Alternativ kann die Oberfläche des Presswerkzeuges bzw. Pressbackens in dem Bereich ungleichförmig beabstandet gegenüber dem Verlauf der Oberfläche ohne den Versatz zurückverschoben sein.

Beispielsweise kann die Oberfläche der Pressbacke in dem Bereich zumindest teilweise im Wesentlichen rechtwinklig zu der Stirnfläche der Pressbacke und/oder tangential bezüglich der Mittelachse des Presswerkzeuges verlaufen. Eine solche Ausgestaltung der zurückgenommenen Oberfläche lässt sich in technisch einfacher Weise realisieren. Insbesondere ist die Oberfläche dazu in dem Bereich zumindest teilweise im Wesentlichen gerade bzw. geradflächig ausgebildet.

Die Ausgestaltungen nach Anspruch 4 und Anspruch 5 zielen jeweils darauf ab, für die Bandbreite der zu bearbeitenden Werkstücke den zurückgenommenen Bereich der Oberfläche des einen Pressbackens ausreichend zu dimensionieren, um im Zuge des Umformvorganges einen Teil des fließenden Werkstoffs soweit aufzunehmen, dass eine ungewollte ungezielte plastische Formänderung verhindert ist und insbesondere lediglich eine flache Aufwulstung entsteht.

Durch die Ausgestaltung nach Anspruch 6 ist sichergestellt, dass das umzuformende Werkstück über die Breite der daran angreifenden Pressbacken die angestrebte gezielte Formänderung erfährt und ungewollte ungezielte plastische Formänderungen vermieden sind.

Die Ausgestaltung der Erfindung nach Anspruch 7 zielt wiederum darauf ab, mittels des Presswerkzeuges eine flache Aufwulstung an dem umgeformten Werkstück zu erzeugen, deren Oberfläche im Wesentlichen gleichförmig zu der Oberfläche des Werkstückes ist. Es ist dadurch die Funktionalität der Oberfläche des umgeformten Werkstückes gegenüber dem Zustand vor der Umformung im Wesentlichen nicht oder zumindest nur geringfügig verändert.

Durch die Ausgestaltung nach Anspruch 8 lassen sich runde bzw. kreisrunde Rohrelemente miteinander verbinden, so dass sich für das Presswerkzeug ein weiter Anwendungsbereich ergibt, insbesondere der Sanitärbereich, wie auch der Heizungsbereich und der Klimabereich umfasst ist.

Die Ausgestaltungen nach Anspruch 9 Anspruch 10 zielen jeweils darauf ab, das Werkstück durch den Umformvorgang auch tatsächlich in die angestrebte Form zu bringen und somit ein ordnungsgemäßes Verbinden der Werkstücke gegeneinander zu erreichen.

Alternativ zu der Ausgestaltung nach Anspruch 10 kann es auch vorgesehen sein, dass nach einer Umformung die Stirnflächen der Schließstelle zueinander beabstandet sind. Es ist dadurch ein Umformen des Werkstückes mit verringerter maximaler Umformkraft erreicht.

Durch die Ausgestaltung nach Anspruch 11 ist es in technisch einfacher Weise möglich, eine Umformkraft auf die Pressbacken auszuüben, da durch die gelenkige Verbindung die Pressbacken in Art einer Schlinge um die zu verbindenden Werkstücke umgelegt werden können und zum Ausüben des Umformvorganges lediglich die freien Enden der am Ende der Kette angeordneten Pressbacken in Richtung gegeneinander zu drücken sind.

Durch die Ausgestaltung nach Anspruch 12 können die zu verbindenden Werkstücke in technisch einfach handhabbarer Weise in einen Bearbeitungsbereich an dem Presswerkzeug gebracht werden, in welchen die Pressbacken umformend auf das wenigstens eine der Werkstücke wirken.

Die Ausgestaltung nach Anspruch 13 nutzt drei oder mehr als drei gegeneinander bewegbare Bremsbacken. Die Bremsbacken sind kettenartig miteinander verbunden, wobei die Schließstelle durch diejenigen Pressbacken gebildet ist, welche die endseitigen Kettenglieder bilden.

Das Presswerkzeug kann eine Presskette, Pressschlinge oder ein Pressring sein. Insbesondere ist das Presswerkzeug handhaltbar und/oder händisch betätigbar. Es bietet sich an, dass zumindest die Pressbacken des Presswerkzeuges aus Metall oder einer Metalllegierung bestehen.

Weitere Ziele, Vorteile, Merkmale und Anwendungsmöglichkeiten der vorliegenden Erfindung ergeben sich aus der nachfolgenden Beschreibung zweier Ausführungsbeispiele anhand der Zeichnung.

Es zeigen:
- Fig. 1: eine mögliche Ausführungsform eines Presswerkzeuges zum Verbinden von Werkstücken mittels Umformen in einer Seitenansicht,
- Fig. 2: eine vergrößerte Darstellung eines Ausschnittes einer der Pressbacken des Presswerkzeuges gemäß der Figur 1 in Schnittdarstellung,
- Fig. 3A: das Presswerkzeug gemäß der Figur 1 vor dem Pressvorgang, wobei das Presswerkzeug mit seinen Pressbacken zwei miteinander zu verbindende Werkstücke umgreift,
- Fig. 3B: das Presswerkzeug gemäß der Figur 1 und die davon umgriffenen Werkstücke gemäß der Figur 3A nach dem Pressvorgang, und
- Fig. 4: eine weitere mögliche Ausführungsform eines Presswerkzeuges in einer Seitenansicht.

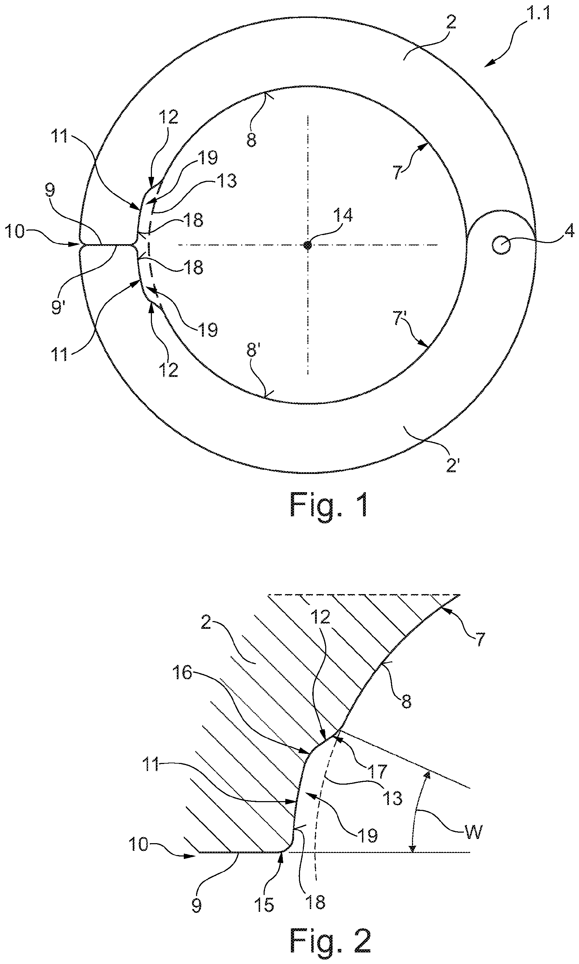

Figur 1 zeigt - in schematischer Darstellung - eine mögliche Ausführungsform eines Presswerkzeuges 1.1 zum Verbinden von Werkstücken mittels Umformen, insbesondere mittels Kaltumformen. Das Presswerkzeug 1.1 kann Bestandteil einer mobilen Pressmaschine sein, welche beispielsweise handgehalten und/oder händisch betätigbar, elektrisch betätigbar oder elektrohydraulisch betätigbar ist.

Das Presswerkzeug 1.1 weist zwei um eine Schwenkachse 4 gegeneinander verschwenkbar gelagerte Pressbacken 2 und 2' auf, welche zwischen sich (in der Figur 1 nicht dargestellte) zu verbindende Werkstücke aufnehmen können. Die Pressbacken 2, 2' weisen an ihren einander zugewandten Innenseiten 7, 7' jeweils eine Wirkfläche 8, 8' auf, welche eine Matrize für die (in der Figur 1 nicht dargestellten) zu verbindenden Werkstücke ausbilden.

Bevorzugt ist die jeweilige Innenseite 7, 7' als Bogenabschnitt ausgebildet, wobei bevorzugt im geschlossenen Zustand des Presswerkzeuges 1.1 die Innenseiten 7, 7' einen Ring, insbesondere geschlossenen Ring bilden, welcher eine im Wesentlichen runde Querschnittsform, insbesondere kreisrunde Querschnittsform, aufweist.

Die Pressbacken 2 und 2' weisen an ihrem freien Ende, welches von der Schwenkachse 4 beabstandet ist, jeweils eine Stirnfläche 9 bzw. 9' auf, wobei die Stirnflächen 9, 9' einander zugewandt liegen. Die Figur 1 zeigt das Presswerkzeug 1.1 im geschlossenen Zustand der Pressbacken 2, 2', in welchem die Stirnflächen 9 und 9' gegeneinander anliegen. Die Stirnflächen 9 und 9' bilden eine Schließstelle 10 des Presswerkzeuges 1.1.

Bevorzugt sind die Stirnflächen 9 und 9' durch ein Auseinanderschwenken der Pressbacken 2, 2' soweit voneinander weg in einen Abstand bewegbar, dass die (in der Figur 1 nicht dargestellten) zu verbindenden Werkstücke zwischen den Stirnflächen 9, 9' hindurch in den Innenbereich des Presswerkzeuges 1.1 gebracht werden können, in welchem dann im Zuge einer Schließbewegung der Pressbacken 2, 2' in Richtung gegeneinander die Wirkflächen 8, 8' gegen die Außenumfangsfläche des außenliegenden (nicht in der Figur 1 dargestellten) Werkstückes gedrückt werden.

Es ist vorgesehen, dass wenigstens eine der beiden Pressbacken 2, 2' in einem an die Stirnfläche 9 bzw. 9' angrenzenden Bereich 11 an ihrer Innenseite 7 bzw. 7' eine besondere Ausgestaltung aufweist. Bei dem Presswerkzeug 1.1 gemäß der Figur 1 weisen beide Pressbacken 2 und 2' diese Ausgestaltung auf, welche vorzugsweise zueinander im Wesentlichen identisch ausgebildet sind. Zur Veranschaulichung der besonderen Ausgestaltung der Pressbacken 2 bzw. 2' in dem Bereich 11 ist in Figur 2 die Pressbacke 2 in einem Ausschnitt vergrößert dargestellt.

Wie insbesondere daraus ersichtlich ist, ist in dem Bereich 11 die Oberfläche der Innenseite 7 zurückgenommen, insbesondere in radialer Richtung nach außen hin über einen Umfangsabschnitt zurückgenommen. Die Oberfläche der Innenseite 7 ist bevorzugt durch einen Rücksprung oder dergleichen Versatz 12 gegenüber der ursprünglichen Kontur (gestrichelte Linie 13), insbesondere der Zielkontur des Presswerkzeuges 1.1, zurückgenommen. Durch die zurückgenommene Oberfläche 18 wird im Zuge des Pressvorganges das umzuformende Werkstück in dem Bereich 11 im Wesentlichen nicht unterstützt. Etwaiger beim Pressvorgang fließender Werkstoff der umzuformenden Werkstücke kann in den zurückgenommenen Bereich 11 einfließen. Durch die zurückgenommene Oberfläche 18 in dem Bereich 11 ist somit eine Aufnahme 19 bzw. ein Aufnahmeraum für Werkstoff der Werkstücke gezielt vorgegeben, um eine ungewollte ungezielte plastische Formänderung der Werkstücke zu vermeiden.

Die Oberfläche ist in dem Bereich 11 soweit zurückgenommen, dass im Zuge des Pressvorganges das verformte Werkstück auf seiner Oberfläche lediglich eine flache Aufwölbung bzw. Aufwulstung erfährt.

Der Bereich 11 erstreckt sich, bezogen auf die Mittelachse 14 des Presswerkzeuges 1.1, in seinem Umfang um einen Winkel W. Bevorzugt beträgt der Winkel W etwa 5° bis etwa 20°, insbesondere 10° bis 15°. Die absolute Länge des Bereiches 11 beträgt in Umfangsrichtung bevorzugt etwa 2 mm bis etwa 12 mm, insbesondere 4 mm bis 8 mm.

Bevorzugt ist die zurückgenommene Oberfläche 18 in dem Bereich 11 zu der ursprünglichen Kontur (gestrichelte Linie 13) durch den Versatz 12 im Wesentlichen parallel verschoben, insbesondere verläuft die zurückgenommene Oberfläche 18 gegenüber der ursprünglichen Kontur 13 konzentrisch bzw. mit gleicher Krümmung.

Der Versatz 12 kann etwa 1% bis etwa 5%, insbesondere 2% bis 4%, des Durchmessers betragen, den die Innenseiten 7, 7' der Pressbacken 2, 2' außerhalb des Bereiches 11 im geschlossenen Zustand des Presswerkzeuges 1.1 bilden.

Bevorzugt bleibt die Oberfläche gegenüber der ursprünglichen Kontur über den Bereich 11 innerhalb dieser Konturveränderung. Beispielsweise beträgt bei einem Durchmesser von etwa 65 mm der Versatz 12 etwa 1 mm bis 2 mm.

Der Bereich 11 mit seiner zurückgenommenen Oberfläche 18 erstreckt sich in Richtung der Mittelachse 14 des Presswerkzeuges 1.1 gesehen, bevorzugt im Wesentlichen über deren Länge in Richtung der Mittelachse 14, insbesondere im Wesentlichen durchgehend über die Länge, insbesondere gleichförmig.

Wie unter anderem aus der Figur 2 ersichtlich ist, ist der Übergang zwischen der Stirnfläche 9 zu dem angrenzenden Bereich 11 mit einer Rundung 15 versehen, so dass der Übergang abgerundet ist, um Kratzer und Abtragungen an der Oberfläche des zu verformenden Werkstückes beim Verpressen zu vermeiden. Weitere Rundungen 16, 17 können an dem Versatz 12 ausgebildet sein. Die Rundungen 16 und 17 bewirken, dass durch die zurückgesetzte Oberfläche 18 scharfkantige Übergänge an dem umgeformten Werkstück vermieden sind.

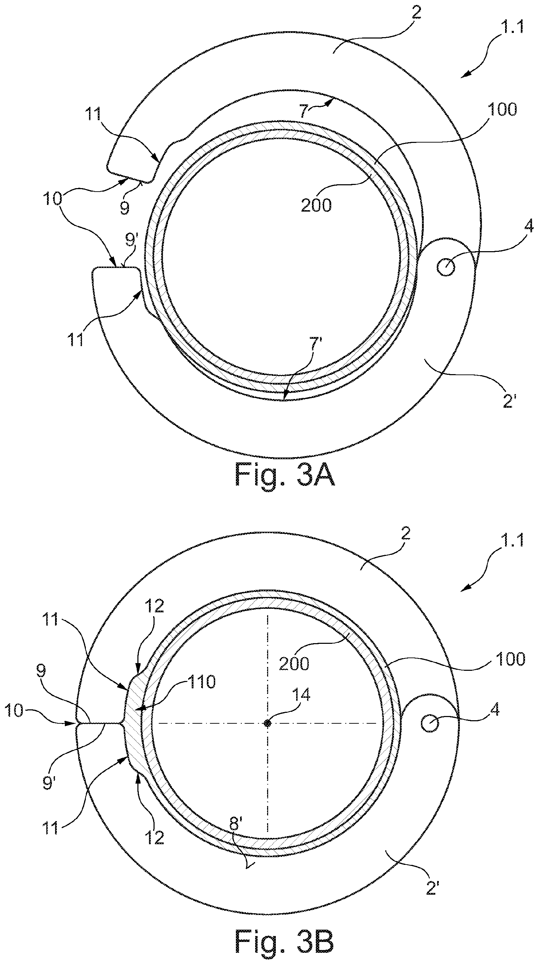

Figur 3A zeigt das Presswerkzeug 1.1 der Figuren 1 und 2 in einem geöffneten Zustand. Zwischen den Pressbacken 2 und 2' sind zwei Werkstücke 100 und 200, insbesondere Rohrstücke, aufgenommen, welche in dem aufgenommenen Bereich ineinandergeschoben sind. Durch Zusammendrücken der Pressbacken 2 und 2' erfolgt ausgehend von dem in der Figur 3A dargestellten Zustand die Umformung zumindest des außenliegenden Werkstückes 100, so dass durch die Umformung die Werkstücke 100 und 200 gegeneinander verpresst werden und damit eine feste Verbindung der Werkstücke 100 und 200 miteinander erzeugt ist.

Dieser Zustand nach der Umformung ist in Figur 3B gezeigt, in welcher das Presswerkzeug 1.1 mit gegeneinander verschwenkten Pressbacken 2 und 2' mit gegeneinander in Anlage gebrachten Stirnflächen 9 und 9' vorliegt. Das Werkstück 100 durch die zurückgenommene Oberflächen 18 der Pressbacken 2 und 2' in dem Bereich 11 und der dadurch vorgegebenen Zielkontur entsprechend verformt worden, so dass das Werkstück 100 dort eine Aufwulstung 110, einen Höcker oder dergleichen Ausbeulung nach außen hin aufweist.

Je nach Anwendungsfall kann auch das innenliegende Werkstück eine Aufwulstung, einen Höcker oder dergleichen Ausbeulung aufweisen. In dem Anwendungsfall gemäß der Figuren 3A und 3B ist das innenliegende Werkstück 200 durch den Pressvorgang im Wesentlichen ohne Verformung geblieben.

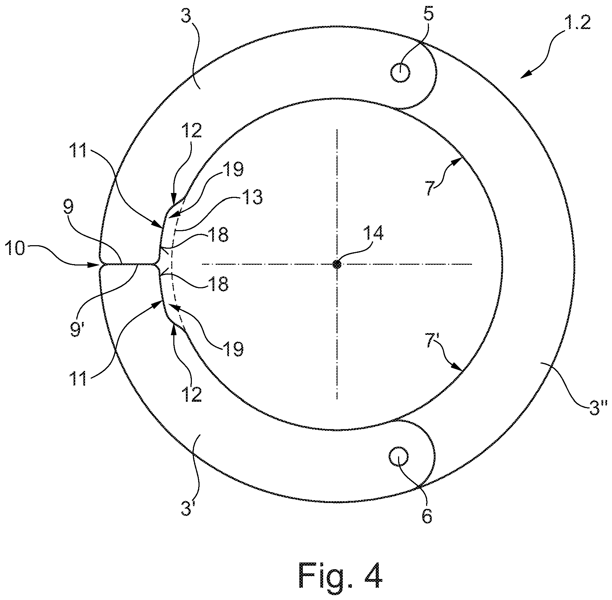

Figur 4 zeigt eine weitere Ausführungsform eines Presswerkzeuges 1.2 in schematischer Darstellung. Bauteile des Presswerkzeuges 1.2 gemäß der Figur 4, welche identisch oder funktionsgleich mit den Bauteilen des Presswerkzeuges 1.1 gemäß der Figuren 1.3 sind, sind mit gleichen Bezugszeichen versehen; insofern wird auf die Beschreibung zu dem Presswerkzeug 1.1 gemäß der Figuren 1 bis 3 verwiesen.

Das Presswerkzeug 1.2 gemäß der Figur 4 unterscheidet sich von dem Presswerkzeug 1.1 gemäß der Figuren 1 bis 3 unter anderem dadurch, dass das Presswerkzeug 1.2 drei Pressbacken 3, 3' und 3" aufweist, welche gegeneinander bewegbar gelagert sind. Die Pressbacken 3, 3', 3" sind miteinander kettenartig verbunden, wobei die die Schließstelle 10 bildenden Pressbacken 3 und 3' die endseitigen Kettenglieder bilden.

### Bezugszeichenliste

- 1.1: Presswerkzeug
- 1.2: Presswerkzeug
- 2: Pressbacke
- 2': Pressbacke
- 3: Pressbacke
- 3': Pressbacke
- 3": Pressbacke
- 4: Schwenkachse
- 5: Schwenkachse
- 6: Schwenkachse
- 7: Innenseite
- 7': Innenseite
- 8: Wirkfläche
- 8': Wirkfläche
- 9: Stirnfläche
- 9': Stirnfläche
- 10: Schließstelle
- 11: Bereich
- 12: Versatz
- 13: gestrichelte Linie (ursprüngliche Kontur)
- 14: Mittelachse
- 15: Rundung
- 16: Rundung
- 17: Rundung
- 18: zurückgenommene Oberfläche
- 19: Aufnahme

- 100: Werkstück
- 110: Aufwulstung
- 200: Werkstück
- W: Winkel

## Patentansprüche

1. Presswerkzeug (1.1; 1.2) zum Verbinden von Werkstücken (100, 200) mittels Umformen mit wenigstens zwei gegeneinander bewegbaren Pressbacken (2, 2'; 3, 3', 3"), mittels welchen die zu verbindenden Werkstücke (100, 200) zumindest teilweise umgreifbar sind und welche eine Matrize für wenigstens eines der zu verbindenden Werkstücke (100, 200) ausbilden, und mit einer Schließstelle (10), welche durch einander zugeordnete Stirnflächen (9, 9') von zwei der Pressbacken (2, 2'; 3, 3', 3") gebildet ist, wobei in einem geschlossenen Zustand des Presswerkzeuges (1.1; 1.2) der von den Pressbacken (2, 2'; 3, 3', 3") eingefangene Raum eine Zielkontur (13) bildet und wobei in einem, an wenigstens eine der Stirnflächen (9, 9') der Schließstelle (10) angrenzenden Bereich (11) die Oberfläche der zugehörigen Pressbacke (2; 2'; 3; 3') gegenüber der Zielkontur (13) durch einen Versatz (12) zurückgenommen ist, **dadurch gekennzeichnet, dass** die Oberfläche der Pressbacke (2; 2'; 3; 3') in dem Bereich (11) einen gleichbleibenden Abstand zu der Zielkontur (13) hat.

2. Presswerkzeug nach Anspruch 1, **dadurch gekennzeichnet, dass** durch die zurückgenommene Oberfläche (18) eine Aufnahme (19) für Verformungsmaterial wenigstens eines der Werkstücke (100, 200) gebildet ist, wobei die Aufnahme (19) im geschlossenen Zustand des Presswerkzeuges (1.1; 1.2) beibehalten ist.

3. Presswerkzeug nach einem der vorhergehenden Ansprüche, **dadurch gekennzeichnet, dass** die Oberfläche der Pressbacke (2; 2'; 3; 3') in dem Bereich (11) zumindest teilweise im Wesentlichen rechtwinklig zu der Stirnfläche (9; 9') der Pressbacke (2; 2'; 3; 3') und/oder tangential bezüglich der Mittelachse (14) des Presswerkzeuges (1.1; 1.2) verläuft.

4. Presswerkzeug nach einem der vorhergehenden Ansprüche, **dadurch gekennzeichnet, dass** der Bereich (11) eine absolute Länge in Umfangsrichtung von etwa 2 mm bis etwa 12 mm, insbesondere 2 mm bis 12 mm, vorzugsweise 4 mm bis 8 mm, aufweist.

5. Presswerkzeug nach einem der vorhergehenden Ansprüche, **dadurch gekennzeichnet, dass** bezogen auf die Mittelachse (14) des Presswerkzeuges (1.1; 1.2) der Bereich (11) einen Winkel (W) von etwa 5° bis etwa 20°, insbesondere 5° bis 20°, vorzugsweise 10° bis 15°, überspannt.

6. Presswerkzeug nach einem der vorhergehenden Ansprüche, **dadurch gekennzeichnet, dass** in Richtung der Mittelachse (14) des Presswerkzeuges (1.1; 1.2) gesehen, der Bereich (11) sich im Wesentlichen über die Länge der Pressbacke (1.1; 1.2) erstreckt, insbesondere durchgehend erstreckt.

7. Presswerkzeug nach einem der vorhergehenden Ansprüche, **dadurch gekennzeichnet, dass** in Richtung der Mittelachse (14) des Presswerkzeuges (1.1; 1.2) gesehen, der Bereich (11) und/oder der Versatz (12) sich im Wesentlichen gleichförmig erstreckt.

8. Presswerkzeug nach einem der vorhergehenden Ansprüche, **dadurch gekennzeichnet, dass** bei gegeneinander bewegten Pressbacken (2, 2'; 3, 3', 3") die von den Pressbacken (2, 2'; 3, 3', 3") gebildete Matrize eine im Wesentlichen runde, insbesondere kreisrunde Querschnittsform aufweist.

9. Presswerkzeug nach einem der vorhergehenden Ansprüche, **dadurch gekennzeichnet, dass** bei gegeneinander bewegten Pressbacken (2, 2'; 3, 3', 3") die Stirnflächen (9, 9') der Schließstelle (10) in Anlage gegeneinander gebracht sind.

10. Presswerkzeug nach einem der vorhergehenden Ansprüche, **dadurch gekennzeichnet, dass** nach einer Umformung die Stirnflächen (9, 9') der Schließstelle (10) gegeneinander anliegen.

11. Presswerkzeug nach einem der vorhergehenden Ansprüche, **dadurch gekennzeichnet, dass** von den Pressbacken (2, 2'; 3, 3', 3") jeweils zwei benachbarte Pressbacken (2, 2'; 3, 3"; 3', 3") miteinander gelenkig verbunden sind, so dass die zu verbindenden Werkstücke (100, 200) von den Pressbacken (2, 2'; 3, 3', 3") umgreifbar sind.

12. Presswerkzeug nach einem der vorhergehenden Ansprüche, **dadurch gekennzeichnet, dass** die Stirnflächen (9, 9') der Schließstelle (10) soweit in einen Abstand zueinander bringbar sind, dass eine Einführöffnung für die zu verbindenden Werkstücke (100, 200) gebildet ist, um die Werkstücke (100, 200) mittels der Pressbacken (2, 2'; 3, 3', 3") zu umgreifen.

13. Presswerkzeug nach einem der vorhergehenden Ansprüche, **dadurch gekennzeichnet, dass** wenigstens drei gegeneinander bewegbare Pressbacken (3, 3', 3") vorgesehen sind, welche miteinander kettenartig verbunden sind, wobei die die Schließstelle (10) bildenden Pressbacken (3, 3') die endseitigen Kettenglieder bilden.

## Claims

1. Pressing tool (1.1; 1.2) for connecting workpieces (100, 200) by forming, with at least two pressing jaws (2,2'; 3, 3', 3") which are movable against one another and by means of which the workpieces (100, 200) to be connected can be at least partially engaged around and which form a die for at least one of the workpieces (100, 200) to be connected, and with a closing point (10) which is formed by mutually assigned end surfaces (9, 9') of two of the pressing jaws (2, 2'; 3, 3', 3"), wherein, in a closed state of the pressing tool (1.1; 1.2), the space trapped by the pressing jaws (2, 2'; 3, 3', 3") forms a target contour (13), and wherein, in a region (11) adjoining at least one of the end surfaces (9, 9') of the closing point (10), the surface of the associated pressing jaw (2; 2'; 3; 3') is set back in relation to the target contour (13) by means of an offset (12), **characterized in that,** in the region (11), the surface of the pressing jaw (2; 2'; 3; 3') is at a constant distance from the target contour (13).

2. Pressing tool according to Claim 1, **characterized in that** the set-back surface (18) forms a receptacle (19) for deformation material of at least one of the workpieces (100, 200), wherein the receptacle (19) is retained in the closed state of the pressing tool (1.1; 1.2).

3. Pressing tool according to either of the preceding claims, **characterized in that**, in the region (11), the surface of the pressing jaw (2; 2'; 3; 3') at least partially runs substantially at a right angle to the end surface (9; 9') of the pressing jaw (2; 2'; 3; 3') and/or tangentially with respect to the centre axis (14) of the pressing tool (1.1; 1.2).

4. Pressing tool according to one of the preceding claims, **characterized in that** the region (11) has an absolute length in the circumferential direction of approximately 2 mm to approximately 12 mm, in particular 2 mm to 12 mm, preferably 4 mm to 8 mm.

5. Pressing tool according to one of the preceding claims, **characterized in that** the region (11) spans an angle (W) of approximately 5° to approximately 20°, in particular 5° to 20°, preferably 10° to 15°, with respect to the centre axis (14) of the pressing tool (1.1; 1.2).

6. Pressing tool according to one of the preceding claims, **characterized in that** the region (11) extends substantially over the length of the pressing jaw (1.1; 1.2), in particular extends continuously, as seen in the direction of the centre axis (14) of the pressing tool (1.1; 1.2).

7. Pressing tool according to one of the preceding claims, **characterized in that** the region (11) and/or the offset (12) extend/extends substantially uniformly, as seen in the direction of the centre axis (14) of the pressing tool (1.1; 1.2).

8. Pressing tool according to one of the preceding claims, **characterized in that**, when the pressing jaws (2, 2'; 3, 3' 3") are moved against one another, the die formed by the pressing jaws (2, 2'; 3, 3', 3") has a substantially round, in particular circular cross-sectional shape.

9. Pressing tool according to one of the preceding claims, **characterized in that**, when the pressing jaws (2, 2'; 3, 3', 3") are moved against one another, the end surfaces (9, 9') of the closing point (10) are brought into contact against one another.

10. Pressing tool according to one of the preceding claims, **characterized in that**, after forming, the end surfaces (9, 9') of the closing point (10) lie against one another.

11. Pressing tool according to one of the preceding claims, **characterized in that**, of the pressing jaws (2, 2'; 3, 3', 3"), in each case two adjacent pressing jaws (2, 2'; 3, 3"; 3', 3") are connected to one another in an articulated manner such that the workpieces (100, 200) to be connected can be engaged around by the pressing jaws (2, 2'; 3, 3', 3") .

12. Pressing tool according to one of the preceding claims, **characterized in that** the end surfaces (9, 9') of the closing point (10) can be brought to a distance from one another to an extent such that an introducing opening for the workpieces (100, 200) to be connected is formed in order to engage around the workpieces (100, 200) by means of the pressing jaws (2, 2'; 3, 3', 3").

13. Pressing tool according to one of the preceding claims, **characterized in that** at least three pressing jaws (3, 3', 3") which are movable against one another and are connected to one another in the manner of a chain are provided, wherein the pressing jaws (3, 3') forming the closing point (10) form the end-side chain links.

## Revendications

1. Outil de presse (1.1; 1.2) servant à relier des pièces (100, 200) par mise en forme à l'aide d'au moins deux mâchoires de presse (2, 2'; 3, 3', 3"), mobiles l'une par rapport à l'autre, au moyen desquelles les pièces (100, 200) à relier peuvent être saisies au moins en partie et qui forment une matrice pour au moins l'une des pièces (100, 200) à relier,
un emplacement de fermeture (10) étant formé par des surfaces frontales (9, 9') de deux des mâchoires de presse (2, 2'; 3, 3', 3") associées l'une à l'autre, l'espace englobé par les mâchoires de presse (2, 2'; 3, 3', 3") lorsque l'outil de presse (1.1; 1.2) est fermé formant un contour cible (13), et la surface des mâchoires de presse (2, 2'; 3, 3', 3") étant en retrait par rapport au contour cible (13) par un décalage (12) dans une partie (11) adjacente à au moins l'une des surfaces frontales (9, 9') de l'emplacement de fermeture (10),
**caractérisé en ce que**
la surface des mâchoires de presse (2, 2'; 3, 3', 3") possède dans la partie (11) une distance constante par rapport au contour cible (13).

2. Outil de presse selon la revendication 1, **caractérisé en ce que** la surface (18) en retrait forme un logement (19) pour le matériel de déformation d'au moins l'une des pièces (100, 200), le logement (19) étant conservé lorsque l'outil de presse (1.1; 1.2) est fermé.

3. Outil de presse selon l'une des revendications précédentes, **caractérisé en ce que** la surface de la mâchoire de presse (2, 2'; 3, 3' 3") s'étend dans la partie (11) au moins en partie essentiellement à angle droit par rapport à la l'outil de presse (1.1; 1.2) de la mâchoire de presse (2, 2'; 3, 3', 3") et/ou tangentiellement par rapport à l'axe central (14) de l'outil de presse (1.1; 1.2).

4. Outil de presse selon l'une des revendications précédentes, **caractérisé en ce que** la partie (11) présente dans la direction périphérique une longueur absolue d'environ 2 mm à environ 12 mm, notamment de 2 mm à 12 mm et de préférence de 4 mm à 8 mm.

5. Outil de presse selon l'une des revendications précédentes, **caractérisé en ce que** par rapport à l'axe central (14) de l'outil de presse (1.1; 1.2), la partie (11) sous-tend un angle (W) d'environ 5°, notamment de 5° à 20° et de préférence de 10° à 15°.

6. Outil de presse selon l'une des revendications précédentes, **caractérisé en ce que** dans la direction de l'axe central (14) de l'outil de presse (1.1; 1.2), la partie (11) s'étend essentiellement sur la longueur de la mâchoire de presse (1.1; 1.2), en particulier de manière continue.

7. Outil de presse selon l'une des revendications précédentes, **caractérisé en ce que** la partie (11) et/ou le décalage (12) s'étendent essentiellement sous la même forme.

8. Outil de presse selon l'une des revendications précédentes, **caractérisé en ce que** lorsque les mâchoires de presse (2, 2'; 3, 3', 3") sont déplacées l'une contre l'autre, la matrice formée par les mâchoires de presse (2, 2'; 3, 3', 3") présente une section transversale de forme essentiellement arrondie et en particulier circulaire.

9. Outil de presse selon l'une des revendications précédentes, caractérisé les surfaces frontales (9, 9') de l'emplacement de fermeture (10) sont amenées à se placer l'une contre l'autre.

10. Outil de presse selon l'une des revendications précédentes, **caractérisé en ce qu'**après une mise en forme, les surfaces frontales (9, 9') de l'emplacement de fermeture (10) reposent l'une contre l'autre.

11. Outil de presse selon l'une des revendications précédentes, **caractérisé en ce que** parmi les mâchoires de presse (2, 2'; 3, 3', 3"), deux mâchoires de presse (2, 2'; 3, 3'; 3, 3"; 3', 3") voisines sont reliées l'une à l'autre de manière articulée de telle sorte que les pièces (100, 200) à relier puissent être saisies par les mâchoires de presse (2, 2'; 3, 3', 3").

12. Outil de presse selon l'une des revendications précédentes, **caractérisé en ce que** les surfaces frontales (9, 9') des $10 peuvent être amenées à une distance mutuelle telle qu'une ouverture d'insertion des pièces (100, 200) à relier soit formée pour saisir les pièces (100, 200) au moyen des mâchoires de presse (2, 2'; 3, 3', 3").

13. Outil de presse selon l'une des revendications précédentes, **caractérisé en ce qu'**au moins trois mâchoires de presse (3, 3', 3") mobiles l'une par rapport à l'autre sont prévues et sont reliées les unes aux autres en chaîne, les mâchoires de presse (3, 3') formant l'emplacement de fermeture (10) constituant les maillons terminaux de la chaîne.
